# EUROPÄISCHE PATENTSCHRIFT

(11) **EP 1 661 929 B1**
(45) Veröffentlichungstag und Bekanntmachung des Hinweises auf die Patenterteilung: **20.07.2011**
(21) Anmeldenummer: 05024749.3
(22) Anmeldetag: 12.11.2005
(51) Int. Cl.: C08G 18/62, C08G 18/67, C08G 18/81

(54) **Polyisocyanatgemische, ein Verfahren zu ihrer Herstellung und ihre Verwendung als Härterkomponente in Polyurethanlacken**
Polyisocyanate mixtures, a process of their production and their use as curing component in polyurethane coatings
Mélanges de polyisocyanates, leur procédé de fabrication, et leur utilisation comme agent réticulant dans des revêtements de polyuréthanne

(30) Priorität: 25.11.2004 DE 102004056849
(43) Veröffentlichungstag der Anmeldung: 31.05.2006
(73) Patentinhaber: Bayer MaterialScience AG, 51368 Leverkusen (DE)
(72) Erfinder: Wamprecht, Christian, Dr., 41472 Neuss (DE); Melchiors, Martin, Dr., 42799 Leichlingen (DE); Schmitz, Jörg, Dr., 51065 Köln (DE)

(56) Entgegenhaltungen:
- US-A- 4 732 960
- US-A- 6 017 998
- US-B1- 6 624 238

## Beschreibung

Die vorliegende Erfindung betrifft modifizierte Polyisocyanatgemische auf der Basis von Polyisocyanaten und Polyacrylateinheiten, ein Verfahren zu ihrer Herstellung und ihre Verwendung als Härterkomponente in Polyurethanlacken.

Bei Polyurethanlacken, insbesondere wenn sie im Fahrzeug-, Industrie- oder Möbelbereich eingesetzt werden sollen, wird in der Regel besonders großen Wert auf die Beständigkeit solcher Lacke gegenüber unterschiedlichen Umwelteinflüssen gelegt. Dabei handelt es sich häufig um die Kriterien Härte, Chemikalien- und Lösemittelbeständigkeit, Kratzfestigkeit inklusive dem sogenannten "Reflow-Verhalten" sowie die Licht- und Wetterbeständigkeit.

Unter "Reflow-Verhalten" wird die Fähigkeit einer ausgehärteten Beschichtung (Lack) verstanden, kleinere Lackschäden (im µm-Bereich), die durch Kratz- oder Schlageinwirkung auf den Lack entstanden sind, durch kalten Fluss des Lacks in die Schadstelle wieder auszugleichen.

Zur Verbesserung der Kratzbeständigkeit werden häufig oligomere Polyisocyanate auf Basis von Hexamethylendiisocyanat (HDI) als Polyisocyanatkomponente eingesetzt. Die daraus hergestellten Polyurethanlacke sind in der Regel zähelastisch und verfügen über ein gutes "Reflow-Verhalten". Nachteilig an solchen Lacken ist die etwas langsame Trocknung bei Raumtemperatur und leicht erhöhter Temperatur sowie die nur mittelmäßige Säurebeständigkeit. Harte, schnell trocknende Polyurethanlacke mit sehr guter Säurebeständigkeit werden in der Regel mit Polyisocyanathärtern auf Basis von Isophorondiisocyanat (IPDI) erhalten. Die Kratzfestigkeit und das "Reflow-Verhalten" solcher Lacke sind jedoch in der Regel nicht ausreichend. Darüber hinaus haben Polyisocyanate auf IPDI-Basis eine hohe Viskosität und einen relativ geringen Isocyanatgehalt.

US-A 4,419,513 beschreibt Isocyanuratpolyisocyanate, die durch gemischte Trimerisierung von HDI und IPDI erhältlich sind. Es wird ausgeführt, dass die beschriebenen gemischten Trimerisate wünschenswerte Eigenschaften bezüglich Härte und Elastizität aufweisen. Nachteilig wirkt sich bei diesen gemischten Trimerisaten aus, dass durch den Anteil an IPDI, der für die notwendige Härte und schnelle physikalische Trocknung erforderlich ist, der Gehalt an Isocyanatgruppen (bezogen auf das Molekulargewicht) geringer ist, als bei reinen HDI-Trimerisaten, was ökonomische Nachteile mit sich bringt.

Die EP-A 0 646 608 betrifft Polyisocyanate, die sich durch cyclische Trimerisierung mindestens eines aliphatischen oder alicyclischen Diisocyanats entweder nach seiner Reaktion mit einem polyfunktionellen Alkohol oder durch Trimerisierung in Gegenwart eines solchen Alkohols erhalten lassen. Solche Polyisocyanate weisen zwar hohe Funktionalitäten auf, durch den Anteil an polyfunktionellem Alkohol im hergestellten Polyisocyanatmolekül sinkt jedoch der Gewichtsanteil an Isocyanatgruppen pro Molekül und infolge der entstehenden Urethangruppen steigt die Viskosität deutlich. Dies erfordert bei der Verwendung des Polyisocyanats eine ökonomisch unerwünscht hohe Einsatzmenge an Polyisocyanathärter und eine erhöhte Lösemittelmenge zur Einstellung der Applikationsviskosität des Lackes.

In US-A 4,454,317 werden unter anderem Polyisocyanatoisocyanurate erwähnt, die durch Trimerisierung von HDI erhältlich sind. Beispielhaft beschrieben wird ein HDI-Trimerisat mit einem NCO-Gehalt von 20,8 Gew.-% und einer Viskosität von 14 Pas bei Raumtemperatur. Über die Möglichkeit, aus solch hochviskosen Polyisocyanaten in Kombination mit geeigneten Polyolen Polyurethanlacke mit verbesserter Chemikalienbeständigkeit herzustellen, wird in der Druckschrift nichts ausgesagt.

Modifizierte Polyisocyanatgemische gemäß DE-A 100 13 187 zeichnen sich durch eine hohe Isocyanatfunktionalität aus, jedoch geht das stark zu Lasten des Isocyanatgehaltes des jeweiligen Polyisocyanats. Bei der Herstellung von hochfunktionellen bzw. hochmolekularen Polyisocyanaten durch Oligomerisierung von Diisocyanaten mittels üblicher Isocyanatreaktionen wie z.B. Biuretisierung, Urethanisierung, Trimerisierung, Allophanatisierung werden in der Regel viele Isocyanatgruppen für diese Molekulargewicht- und Funktionalität-aufbauenden Isocyanatreaktionen verbraucht, d. h. der Isocyanatgehalt des Endproduktes sinkt umso mehr, je höher das Molekulargewicht des Polyisocyanats wird. Dieser Umstand bringt ökonomische Nachteile mit sich.

US-A-4,732,960 beschreibt Polyisocyanat-Zubereitungen auf Basis von Urethanmodifizierten NCO-Prepolymeren, deren Viskosität durch einen hohen Gehalt an unumgesetztem, monomerem Ausgangspolyisocyanat herabgesetzt wird. Die Urethanisierung der Ausgangspolyisocyanate erfolgt mittels OH-fuktioneller Polyacrylate.

Es bestand der Bedarf, neue Polyisocyanatzusammensetzungen zur Verfügung zu stellen, die als Härterkomponente in Polyurethanlacken fungieren, dabei das breite Spektrum der geforderten Lackanforderungsprofile bestens abdecken können und die genannten Nachteile derer des Standes der Technik nicht aufweisen. Diese neuen Polyisocyanatzusammensetzungen sollten zudem in breiter Form variierbar sein und möglichst ein Optimum an erzielbarem Isocyanatgehalt, Molekulargewicht und Funktionalität darstellen.

Es wurde nun gefunden, dass Polyisocyanate, die polyacrylatmodifiziert sind, die geforderten Eigenschaften aufweisen. Diese neuen Polyisocyanate sind durch teilweise Umsetzung von herkömmlichen, bekannten Polyisocyanaten mit hydroxyfunktionellen ungesättigten Verbindungen unter Urethanbildung und anschließender Polymerisation der ungesättigten Gruppen, ggf. auch Copolymerisation mit weiteren ungesättigten Verbindungen erhältlich. Diese neuen Polyisocyanatgemische sind hinsichtlich ihrer Zusammensetzung, ihres Molekulargewichtes, ihrer Funktionalität und damit ihres gesamten Eigenschaftsprofils breit variierbar.

Die erfindungsgemäßen, modifizierten Polyisocyanatgemische sind mit einer Vielzahl von Polyolen sehr gut verträglich und lassen sich zu Polyurethanlacken mit breitem Eigenschaftsspektrum formulieren. Besonders vorteilhaft im Vergleich zum Einsatz der entsprechenden Basispolyisocyanate erweist sich dabei die stark verbesserte physikalische Trocknung und deutlich höhere Lösemittel- und Chemikalienbeständigkeit von entsprechenden Polyurethanlacken, insbesondere auf HDI-Basis, wobei die zähelastischen Eigenschaften, das gute "Reflow-Verhalten" und die hohe Kratzfestigkeit nicht verloren gehen.

Gegenstand der Erfmdung sind polyacrylatmodifizierte Polyisocyanate auf Basis von aromatischen, araliphatischen, cycloaliphatischen und/oder aliphatischen Polyisocyanaten mit einem NCO-Gehalt von 5 bis 25 Gew.-%, einer NCO-Funktionalität ≥ 2, einer Viskosität in lösemittelfreiem Zustand von 150 bis 200 000 mPa·s bei 23°C, gemessen mit einem Rotationsviskosimeter gemäß DIN 53019, dadurch gekennzeichnet, dass sie wenigstens eine Struktureinheit der Formel (I) enthalten, 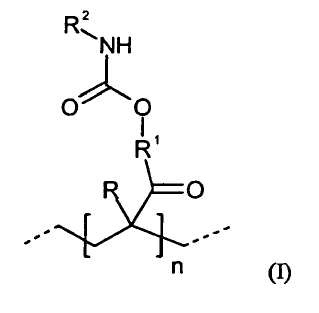 wobei
- R: Wasserstoff oder eine Methylgruppe ist,
- R¹: ein gegebenenfalls heteroatomhaltiger Kohlenwasserstoffrest ist und
- R²: ein Kohlenwasserstoffrest mit wenigstens einer Isocyanatgruppe und darüber hinaus optional Urethan-, Allophanat-, Biuret-, Uretdion-, Isocyanurat- und/oder Iminooxadiazindioneinheiten ist und
- n: eine Zahl ≥ 1 ist.

Der Kohlenwasserstoffrest R² basiert bevorzugt auf aromatischen, cycloaliphatischen, araliphatischen und/oder aliphatischen Di- und/oder Polyisocyanaten und weist bevorzugt wenigstens eine der als optional genannten Struktureinheiten auf.

Gegenstand der Erfindung ist auch ein Verfahren zur Herstellung der erfindungsgemäßen Polyisocyanate, bei dem
A) ein Teil der Isocyanatgruppen eines Ausgangspolyisocyanats mit
B) mindestens einem acrylat- und/oder methacrylatgruppenhaltigen Monoalkohol unter Urethanbildung umgesetzt wird und
C) anschließend oder gleichzeitig zur Urethanisierung die ungesättigten Gruppen des so gebildeten Reaktionsproduktes durch radikalisch initiierte Polymerisation unter Homo- oder Copolymerisation mit gegebenenfalls weiteren ungesättigten Monomeren zur Reaktion gebracht werden.

Als Ausgangspolyisocyanate in Schritt A) können die in der Polyurethanchemie an sich üblichen Di- und/oder Polyisocyanate eingesetzt werden. Dabei ist es unerheblich, ob diese mittels Phosgen oder nach phosgenfreien Verfahren hergestellt werden. Bevorzugt werden als Ausgangspolyisocyanate die urethan-, uretdion-, allophanat-, biuret-, isocyanurat- und/oder iminooxadiazindiongruppenhaltigen Modifizierungsprodukte von einfachen Di- oder Triisocyanaten in A) eingesetzt.

Solche einfachen Isocyanate, die auch in beliebigen Mischungen untereinander eingesetzt werden können, sind beispielsweise 1,6-Diisocyanatohexan, 1-Isocyanato-3,3,5-trimethyl-5-isocyanatomethylcyclohexan (Isophorondiisocyanat), 4,4'-Diisocyanatodicyclohexylmethan, 4-Isocyanatomethyl-1,8-octandiisocyanat, 1,4-Diisocyanatocyclohexan, 1-Methyl-2,4-diisocyanatocyclohexan und seine Gemische mit bis zu 35 Gew.-%, bezogen auf Gesamtgemisch, an 1-Methyl-2,6-diisocyanatocyclohexan, 2,4-Diisocyanatotoluol (TDI) und seine Gemische mit bis zu 35 Gew.-%, bezogen auf Gesamtgemisch, an 2,6-Diisocyanatotoluol.

Besonders bevorzugt werden in A) sogenannte Lackpolyisocyanate eingesetzt. Dies können beispielsweise urethangruppenaufweisende Lackpolyisocyanate sein, die durch Umsetzung von 2,4- und gegebenenfalls 2,6-Diisocyanatotoluol oder 1-Methyl-2,4- und gegebenenfalls 1-Methyl-2,6-diisocyanatocyclohexan mit unterschüssigen Mengen an Trimethylolpropan oder dessen Gemischen mit einfachen Diolen, wie z.B. den isomeren Propan- oder Butandiolen hergestellt werden können. Die Herstellung derartiger, Urethangruppen aufweisender, Lackpolyisocyanate in nahezu monomerfreier Form ist beispielsweise in der DE-A 109 01 96 beschrieben.

Zu den biuretgruppenaufweisenden Lackpolyisocyanaten gehören insbesondere jene auf Basis von 1,6-Diisocyanatohexan, deren Herstellung beispielsweise in EP-A 0 003505, DE-B 1 101 394, US-B 3 358 010 oder US-B 3 903 127 beschrieben ist.

Zu den isocyanuratgruppenaufweisenden Lackpolyisocyanaten gehören die Trimerisate oder Mischtrimerisate der oben beispielhaft genannten Diisocyanate, wie z.B. die isocyanuratgruppenaufweisenden Polyisocyanate auf TDI-Basis gemäß GB-A 1 060 430, GB-A 1 506 373 oder GB-A 1 485 564, die Mischtrimerisate aus TDI mit 1,6-Diisocyanatohexan, die beispielsweise gemäß DE-A 164 480 9 oder DE-A 314 467 2 zugänglich sind. Besonders bevorzugte isocyanuratgruppenaufweisende Lackpolyisocyanate sind die aliphatischen, aliphatisch/cycloaliphatischen und/oder cycloaliphatischen Trimerisate oder Mischtrimerisate auf Basis von 1,6-Diisocyanatohexan und/oder Isophorondiisocyanat, die beispielsweise gemäß US-B 4 324 879, US-B 4 288 586, DE-A 310 026 2, DE-A 310 026 3, DE-A 303 386 0 oder DE-A 314 467 2 erhältlich sind.

Ebenfalls geeignete iminooxadiazindiongruppenaufweisende Lackpolyisocyanate und deren Herstellung sind beispielweise in EP-A 798 299, EP-A 896 009, EP-A 962 454 und EP-A 962 455 zu finden.

In einer ganz besonders bevorzugten Ausführungsform der Erfindung werden als Ausgangspolyisocyanate urethan-, uretdion-, allophanat-, biuret-, isocyanurat- und/oder iminooxadiazindiongruppenhaltige Polyisocyanate mit ausschließlich aliphatisch und/oder cycloaliphatisch gebundenen NCO-Gruppen eingesetzt.

Die in A) eingesetzten Ausgangspolyisocyanate weisen bevorzugt einen Gehalt an NCO-Gruppen von 5 bis 25 Gew.-%, eine mittlere NCO-Funktionalität von 2,0 bis 5,0, vorzugsweise 2,8 bis 4,0, und einen Restgehalt an monomeren Diisocyanaten von unter 1 Gew.-%, vorzugsweise unter 0,5 Gew.-% auf.

Als acrylat- und/oder methacrylatgruppenhaltige Monoalkohole in B) werden bevorzugt hydroxyfunktionelle Ester der Acryl- und/oder Methacrylsäure eingesetzt.

Geeignete Ester sind beispielsweise Hydroxyethylacrylat, Hydroxyethylmethacrylat, Hydroxypropylacrylat (bei der Anlagerung von Propylenoxid an Acrylsäure entstehendes Isomerengemisch), Hydroxypropylmethacrylat (bei der Anlagerung von Propylenoxid an Methacrylsäure entstehendes Isomerengemisch) und Butandiolmonoacrylat.

Auch geeignet sind hier die Umsetzungsprodukte der vorstehend genannten Hydroxyester der Acryl- oder Methacrylsäure mit unterschiedlichen Mengen an cyclischen Lactonen oder Monoepoxiden. Bevorzugtes cyclisches Lacton ist ε-Caprolacton und bevorzugte Monoepoxide sind Ethylenoxid, Propylenoxid oder deren Mischungen.

Ebenfalls möglich ist der Einsatz von Umsetzungsprodukten von Glycidylacrylat oder Glycidylmethacrylat mit beliebigen Monocarbonsäuren oder der Einsatz von Umsetzungsprodukten von Acryl- oder Methacrylsäure mit beliebigen Monoepoxiden als hydroxyfunktionelle Komponente in B).

Neben den (meth)acrylatfunktionellen Monoalkoholen kann in B) auch Allylalkohol oder dessen Alkoxylierungsprodukte, wie z.B. ein-, zwei- oder mehrfach ethoxylierter Allylalkohol eingesetzt werden. Bevorzugt ist jedoch die Verwendung von ausschließlich (meth)acrylatfunktionellen Alkoholen der vorstehend genannten Art in B).

Neben den hydroxyfunktionellen ungesättigten Alkoholen in B) können auch nichtfunktionelle, olefinisch ungesättigte Monomere, wie z.B. Styrol, Methylmethacrylat, Ethylacrylat, Butylacrylat, 2-Ethylhexylacrylat, Acrylnitril usw. zugegeben werden. Diese Monomeren reagieren nicht mit den Ausgangsisocyanaten in A) können aber später mit den ungesättigten Gruppen der Alkohole B) copolymerisieren.

Die Umsetzung von A) mit B) kann lösemittelfrei oder in Anwesenheit von Lösemitteln und gegebenenfalls weiteren, nichtfunktionellen ungesättigten Monomeren erfolgen. Geeignete Lösemittel sind solche, die nicht mit Isocyanat- und Hydroxylgruppen reagieren. Dies sind üblicherweise aliphatische, cycloaliphatische und/oder aromatische Kohlenwasserstoffe, wie Alkylbenzole, z.B. Toluol, Xylol; Ester, wie Ethylacetat, n-Propylacetat, Isopropylacetat, n-Butylacetat, n-Hexylacetat, 2-Ethylhexylacetat, Ethylpropionat, Butylpropionat, Pentylpropionat, Ethylenglykolmonoethyletheracetat, das entsprechende Methyletheracetat, Ether wie Ethylenglykolacetatmonomethyl-, -ethyl- oder -butylether; Ketone wie Aceton, Methylethylketon, Methylisobutylketon, Methyl-n-amylketon oder Gemische derartiger Lösemittel.

Bei der zunächst ablaufenden Urethanisierung werden A) mit B) in solch einem Verhältnis miteinander umgesetzt, dass nur ein Teil der NCO-Gruppen von A) verbraucht wird. Bevorzugt wird so viel der Komponente B) eingesetzt, dass maximal 40 Mol-%, vorzugsweise maximal 30 Mol-%, besonders bevorzugt maximal 25 Mol-% und ganz besonders bevorzugt maximal 20 Mol-%, bezogen auf die Isocyanatgruppen der Ausgangspolyisocyanate A) zu Urethangruppen umgesetzt werden.

Die Urethanisierung findet bereits bei Raumtemperatur (23°C) statt, kann aber, falls gewünscht, auch darüber oder darunter durchgeführt werden. Zur Beschleunigung der Reaktion kann die Umsetzung auch bei bis zu 160°C durchgeführt werden. Höhere Temperaturen sind nicht bevorzugt, weil es dann bereits schon zu unkontrollierter Polymerisation der Acrylat- oder Methacrylatgruppen kommen kann.

Bevorzugt erst nach beendeter Urethanisierung, werden die ungesättigten (Meth)Acrylatgruppen durch eine radikalische (Co)Polymerisation zur Reaktion gebracht.

Geeignete Initiatoren zur Durchführung der (Co)Polymerisation der ungesättigten Gruppen der ungesättigten urethanisierten Polyisocyanate C) und gegebenenfalls weiterer ungesättigten Gruppen aus nichtfunktionellen Verbindungen sind übliche Radikalstarter auf Azo- oder Peroxidbasis, jedoch nur solche, die in dem unten genannten Temperaturbereich eine für die Polymerisation genügend lange Halbwertszeit von ca. 5 Sekunden bis ca. 60 Minuten besitzen. Geeignet sind beispielsweise Azodiisobuttersäurenitril, Azo-bis-2-methylvaleronitril, 2,2'-Azobis-(2-methylpropannitril), 2,2'-Azobis-(2-methylbutannitril), 1,1'-Azobis(cyclohexancarbonitril), symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; Peroxydicarbonate, z.B. Diethyl-, Diisopropyl-, Dicyclohexyl-, Dibenzoylperoxydicarbonat sowie tert.-Butyl-peroxy-isopropylcarbonat; tert.-Butylperoxy-2-ethylhexanoat, tert.-Butylperoxy-3,5,5-trimethylhexanoat, tert.-Butylperbenzoat, tert.-Butylperoxydiethylacetat, tert.-Butylperoxyisobutyrat,; Hydroperoxide, wie beispielsweise tert.-Butylhydroperoxid, Cumolhydroperoxid; Dialkylperoxide, wie Dicumylperoxid; tert.-Butylcumylperoxid, Di-tert.-butylperoxid, Di-tert.-amylperoxid, 1,1-Di-tert.-butyl-peroxy-3,3,5-trimethylcyclohexan, 1,1-Di-tert.-butylperoxycyclohexan.

Im allgemeinen erfolgt die Polymerisation im Temperaturbereich von 50 bis 240°C, vorzugsweise 60 bis 220°C und besonders bevorzugt 70 bis 200°C.

Die Polymerisation kann dabei unter einem Druck von bis zu 15 bar durchgeführt werden.

Die Initiatoren werden in Mengen von 0,05 bis 15 Gew.-%, vorzugsweise 0,1 bis 10 Gew.-%, insbesondere 0,2 bis 8 Gew.-%, bezogen auf die Gesamtmenge der in B) eingesetzten Menge an ungesättigten Verbindungen eingesetzt.

Zur Durchführung der Polymerisationsreaktion wird die durch Reaktion von A) mit B) erhaltene urethanmodifizierte Polyisocyanatmischung C) auf die gewünschte Polymerisationstemperatur aufgeheizt. Dann wird der Radikalinitiator zur Reaktionsmischung zudosiert und die durch den Zerfall des Radikalinitiators initiierte radikalische Polymerisation bei der eingestellten Polymerisationstemperatur durchgeführt. Dabei kann die Polymerisationstemperatur auch wunschgemäß verändert werden, um spezielle Molekulargewichtseinstellungen vorzunehmen. Nach Ende der Polymerisation wird das Reaktionsgemisch auf Raumtemperatur abgekühlt. Die resultierenden erfindungsgemäßen polyacrylatmodifizierten Polyisocyanate sind in der Regel farbhelle viskose Flüssigkeiten oder Lösungen, falls Lösungsmittel zum Einsatz kamen.

Es ist auch möglich, während der Durchführung der Polymerisation weitere nichtfunktionelle ungesättigte Monomere in die Reaktionsmischung zu dosieren, die dann mit den ungesättigten Polyisocyanaten C) copolymerisieren können.

Grundsätzlich ist es möglich im erfindungsgemäßen Verfahren noch die an sich üblichen Hilfs- und Zusatzstoffe wie PUR-Katalysatoren, z.B. N,N-Dimethylbenzylamin, N-Methylmorpholin, Zinkoctoat, Zinn-II-octoat oder Dibutylzinndilaurat, zuzusetzen.

Die erfindungsgemäßen polyacrylatmodifizierten Polyisocyanate stellen wertvolle Rohstoffe zur Herstellung von Bindemittelkombinationen dar, die zur Herstellung von Beschichtungsmitteln, Klebstoffen oder Dichtstoffen auf Polyurethanbasis dienen.

Ferner können die reaktiven Isocyanatgruppen der erfindungsgemäßen polyacrylatmodifizierten Polyisocyanate noch mit Blockierungsmitteln blockiert werden, so dass dadurch die Möglichkeit besteht, diese als Vernetzer in 1K PUR-Beschichtungsmitteln einzusetzen.

Geeignete Blockierungsmittel sind ε-Caprolactam, Butanonoxim, Phenol bzw. Phenolderivate, sekundäre Amine, 3,5-Dimethylpyrazol, Malonsäurealkylester oder Monoalkohole.

Ein weiterer Gegenstand der Erfindung sind daher Bindemittelkombinationen mindestens enthaltend ein erfindungsgemäßes polyacrylatmodifiziertes Polyisocyanat, dessen NCO-Gruppen gegebenenfalls ganz oder teilweise blockiert sind sowie ein Bindemittel mit gegenüber NCO-Gruppen reaktiven Gruppen.

Als Bindemittel mit gegenüber NCO-Gruppen reaktiven Gruppen werden bevorzugt die in der Beschichtungstechnologie an sich üblichen OH- und/oder NH-funktionellen Harze eingesetzt.

Solche Harze und ihre Herstellung sind literaturbekannt und stammen bevorzugt aus der Gruppe der Polyester, Polyacrylate, Polyurethane, Polyharnstoffe, Polycarbonate oder Polyether. Auch der Einsatz von beliebigen Hybridharzen oder beliebigen Mischungen verschiedener hydroxyfunktioneller Harze ist möglich.

Vorzugsweise sind die eingesetzten Harze hydroxy- und/oder aminofunktionell, als weitere Funktionalität können Carbon- und/oder Sulfonsäuregruppierungen sowie Epoxidgruppen vorliegen. Es ist auch möglich, neben hydroxyfunktionellen Harzen auch nichtfunktionelle Harze, die lediglich physikalisch oder oxidativ trocknen, alleine oder in Kombination mit hydroxyfunktionellen Harzen als Bindemittelkomponente und Reaktionspartner für die erfindungsgemäßen Polyisocyanatgemische einzusetzen.

Diese Harze haben üblicherweise Hydroxylgehalte von 0,5 bis 15,0 Gew.-%, vorzugsweise 0,5 bis 12,0 Gew.-%, besonders bevorzugt 1,0 bis 10,0 Gew.-% und ganz besonders bevorzugt 1,0 bis 8,0 Gew.-%, bezogen auf Festharz. Die Säurezahlen der Festharze liegen unterhalb von 50 mg KOH/g, vorzugsweise unterhalb von 30 mg KOH/g, besonders bevorzugt unterhalb von 20 mg KOH/g und ganz bevorzugt unterhalb von 15 mg KOH/g.

Von besonderem Interesse bezüglich des Anforderungsniveaus in den Bereichen Autoerst-, Autoreparatur- und Großfahrzeuglackierung, allgemeine Industrielackierung, Kunststofflackierung, Korrosionsschutz sowie Holz- und Möbellackierung sind Harze der vorstehend genannten Art auf Polymerisat- und/oder Polyesterbasis, insbesondere Polyacrylatbasis. Im Baubereich bzw. zur Beschichtung von mineralischen Untergründen kommen vorzugsweise Harze auf Polyetherbasis zum Einsatz.

In den erfindungsgemäßen Bindemittelkombinationen beträgt das Verhältnis von freien und blockierten NCO-Gruppen zu den NCO-reaktiven Gruppen der Bindemittel 5 : 1 bis 1 : 2, bevorzugt 2 : 1 bis 1 : 2, besonders bevorzugt von 1,5 : 1 bis 1 : 1,5 und ganz besonders bevorzugt 1,2 : 1 bis 1 : 1,2.

Wenn die NCO-Gruppen der erfindungsgemäßen polyacrylatmodifizierten Polyisocyanate nicht blockiert sind, haben die Bindemittelkombinationen nur eine begrenzte Verarbeitungszeit von ca. 3 bis 24 Stunden und werden entweder als solche (Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen Lösungsmittel in Betracht, wie z.B. Ethylacetat, n-Propylacetat, iso-Propylacetat, n-Butylacetat, n-Hexylacetat, n-Heptylacetat, 2-Ethylhexylacetat, Methoxypropylacetat, Methylethylketon, Methylisobutylketon, Toluol, Xylol, höhere Aromatengemische, Testbenzin oder beliebige Gemische dieser Lösungsmittel.

Weitere, gegebenenfalls mitzuverwendende Hilfs- und Zusatzmittel sind Weichmacher, wie Trikresylphosphat, Phthalsäurediester, Chlorparaffine, Pigmente und Füllstoffe, wie Titandioxid, Bariumsulfat, Kreide, Ruß, Katalysatoren, wie z.B. N,N-Dimethylbenzylamin, N-Methylmorpholin, Zinkoctoat, Zinn-II-octoat oder Dibutylzinndilaurat, Verlaufsmittel, Verdickungsmittel, gegebenenfalls Stabilisatoren, wie substituierte Phenole; organofunktionelle Silane als Haftvermittler sowie Lichtschutzmittel und UV-Absorber. Derartige Lichtschutzmittel sind beispielsweise sterisch gehinderte Amine, wie sie z.B. in DE-OS 2 417 353 und DE-OS 2 456 864 beschrieben sind. Bevorzugte Lichtschutzmittel sind Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zeolithen, entfernt werden.

Die Trocknung der aus den erfindungsgemäßen Bindemittelkombinationen erhaltenen Lackfilme kann bei Raumtemperatur erfolgen und bedarf keiner Temperaturerhöhung, um die eingangs erwähnten, optimalen Eigenschaften zu erreichen. Bei Anwendung der Bindemittel als Reparaturlack ist jedoch oftmals eine Temperaturerhöhung auf ca. 60 bis 100°C, vorzugsweise 60 bis 80°C, während eines Zeitraumes von 20 bis 60 Minuten empfehlenswert, um die Trocknungs- und Härtungszeit zu verkürzen.

Die entstehenden Lackfilme zeichnen sich durch eine hohe Härte, eine gute Elastizität, eine ausgezeichnete Witterungs- und Chemikalienbeständigkeit sowie einen hohen Glanz aus. Besonders die Härtungszeiten sowohl für die physikalische Antrocknung als auch die chemische Vernetzung sind sehr kurz, das heißt kürzer als bei Verwendung nicht-polyacrylatmodifizierter Polyisocyanate, so dass entsprechend beschichtete Gebrauchsgegenstände sehr schnell gegenüber Lösemitteln und Chemikalien resistent sind und in Gebrauch genommen werden können.

Die erfindungsgemäß zum Einsatz gelangenden Lacke eignen sich daher vor allem für die Lackierung von Großfahrzeugen, wie z.B. Flugzeuge, Eisenbahn- und Straßenbahnwaggons, LKW-Aufbauten und dgl. Weitere bevorzugte Einsatzgebiete sind die Autoreparatur- und Kunststofflackierung. Weiterhin geeignet sind die Lacke für Korrosionsschutzanwendungen, wie z.B. die Beschichtung von Brücken und Strommasten, für die Holz- und Möbellackierung, für die Allgemeine Industrielackierung und für die Autoerstlackierung.

Die Applikation solcher Lacke erfolgt nach üblichen Methoden, beispielsweise durch Spritzen, Gießen, Tauchen, Streichen, Sprühen oder Walzen. Die erfindungsgemäßen Lacke eignen sich sowohl zur Herstellung von Grundierungen als auch zur Herstellung von Zwischenschichten und insbesondere zur Herstellung von pigmentierten Deckschichten und Basislacken und vor allem zur Herstellung von Klarlacken auf den zu lackierenden Substraten.

### Beispiele:

Sofern nicht abweichend angegeben, beziehen sich alle Prozentangaben auf das Gewicht.

### Abkürzungen und verwendete Einsatzstoffe:

**HEA:** Hydroxyethylacrylat
**HEMA:** Hydroxyethylmethacrylat
**HPMA:** Hydroxypropylmethacrylat
**Desmodur® 3200:** aliphatisches, biuretgruppenhaltiges Polyisocyanat auf HDI-Basis, lösemittelfrei, NCO-Gehalt 23,0%, Bayer MaterialScience AG, Leverkusen, DE.
**Desmodur® N 3300:** NCO-gruppenhaltiges HDI-Trimerisat, lösemittelfrei, NCO-Gehalt 21,8%, Bayer MaterialScience AG, Leverkusen, DE.
**Desmodur® N 3600:** niedrigviskoses NCO-gruppenhaltiges HDI-Trimerisat, lösemittelfrei, NCO-Gehalt 23,0%, Bayer MaterialScience AG, Leverkusen, DE.
**Desmodur® N 75 BA:** NCO-gruppenhaltiges HDI-Biuret, 75%ig in Butylacetat, NCO-Gehalt 16,5%, Bayer MaterialScience AG, Leverkusen, DE.
**Desmodur® XP 2410:** niedrigviskoses, aliphatisches Polyisocyanat auf Basis Hexamethylendiisocyanat, lösemittelfrei, NCO-Gehalt 23,7%, Bayer MaterialScience AG, Leverkusen, DE.
**Peroxan® PO 49B:** tert.-Butylperoxy-2-ethylhexanoat, 49 %ig in Butylacetat, Pergan GmbH, Bocholt, DE

Als Kenndaten wurden der Festgehalt (Dickschichtmethode: Deckel, 1g Probe, 1h 125°C, Konvektionsofen, Grundlage DIN EN ISO 3251), die Viskosität (Rotationsviskosimeter VT 550 der Firma Haake GmbH, Karlsruhe, DE, MV-DIN Becher bei Viskosität < 10.000 mPa·s/23°C, SV-DIN Becher bei Viskosität > 10.000 mPa·s/23°C), der NCO-Gehalt (Lösemittel Aceton, Dibutylaminüberschuss, Harnstoffbildung, Titration mit 1 mol/l HCl, Grundlage DIN EN ISO 11909) und die Hazen-Farbzahl (Hazen-Farbzahl nach DIN 53995, Farbzahlmessgerät Lico® 400, Dr. Lange GmbH, Berlin, DE) bestimmt.

### Herstellung der erfindungsgemäßen polyacrylatmodifizierten Polyisocyanate

In einem 1 Liter Dreihalskolben mit Rührer, Rückflusskühler und Tropftrichter wurde das jeweilige Ausgangspolyisocyanat und gegebenenfalls Butylacetat als Lösemittel vorgelegt und unter Stickstoffatmosphäre auf 130°C aufgeheizt. Dann wurde der ungesättigte Monoalkohol innerhalb von 10 Minuten zudosiert und anschließend für 1 Stunde bei 130°C weitergerührt, bevor die gewünschte Polymerisationstemperatur (T) eingestellt wurde. Nach Erreichen dieser Temperatur wurde der Polymerisationsinitiator Peroxan® PO 49B in einer Portion zugegeben und noch 1 Stunde bei der eingestellten Polymerisationstemperatur gerührt. Dann wurde auf Raumtemperatur abgekühlt, wobei die farbhellen, viskosen erfindungsgemäßen Polyisocyanate (PIC) erhalten wurden.

In der nachfolgende Tabelle 1 sind die jeweiligen Rohstoffe, Mengenverhältnisse und Reaktionsbedingungen aufgeführt. Mengenangaben in g.

| PIC | Butylacetat [g] | D'dur N 3300 [g] | D'Dur N 3600 [g] | HEA [g] | HEMA [g] | Peroxan® [g] | T [°C] |
|---|---|---|---|---|---|---|---|
| 1 | 75 | 412,25 | - | 12,11 | - | 0,64 | 130 |
| 2 | 75 | 412,25 | - | 12,11 | - | 0,64 | 100 |
| 3 | - | 679,00 | - | 19,95 | - | 1,05 | 130 |
| 4 | 75 | 408,00 | - | 16,15 | - | 0,85 | 130 |
| 5 | 75 | 408,00 | - | 16,15 | - | 0,85 | 100 |
| 6 | - | 672,00 | - | 26,60 | - | 1,40 | 130 |
| 7 | - | 672,00 | - | 26,60 | - | 1,40 | 100 |
| 8 | 75 | - | 412,25 | 12,11 | - | 0,64 | 130 |
| 9 | 75 | - | 412,25 | 12,11 | - | 0,64 | 100 |
| 10 | - | - | 679,00 | 19,95 | - | 1,05 | 130 |
| 11 | 75 | - | 408,00 | 16,15 | - | 0,85 | 130 |
| 12 | 75 | - | 408,00 | 16,15 | - | 0,85 | 100 |
| 13 | - | - | 672,00 | 26,60 | - | 0,85 | 130 |
| 14 | - | - | 672,00 | 26,60 | - | 0,85 | 100 |
| 15 | - | 676,62 | - | - | 22,33 | 1,05 | 130 |
| 16 | - | 668,78 | - | - | 29,82 | 1,40 | 130 |
| 17 | - | - | 676,62 | - | 22,33 | 1,05 | 130 |
| 18 | - | - | 668,78 | - | 29,82 | 1,40 | 130 |

In der nachfolgenden Tabelle 2 sind die Kenndaten der erfindungsgemäßen Polyisocyanate PIC 1 bis 18 aufgeführt.

| PIC | Festgehalt [Gew.-%] | Viskosität bei 23 °C [mPa·s] | NCO-Gehalt [Gew.-%] | Hazen-Farbzahl [APHA] |
|---|---|---|---|---|
| 1 | 84,7 | 593 | 16,8 | 0 |
| 2 | 85,2 | 726 | 16,8 | 0 |
| 3 | 99,9 | 13012 | 20,0 | 0 |
| 4 | 85,0 | 948 | 16,3 | 0 |
| 5 | 84,6 | 1510 | 16,6 | 11 |
| 6 | 99,9 | 27308 | 19,5 | 11 |
| 7 | 99,8 | 92062 | 18,5 | 11 |
| 8 | 85,3 | 250 | 17,8 | 6 |
| 9 | 84,7 | 314 | 17,8 | 0 |
| 10 | 100,0 | 3703 | 21,1 | 11 |
| 11 | 85,1 | 440 | 17,4 | 9 |
| 12 | 85,4 | 664 | 17,4 | 0 |
| 13 | 99,9 | 8489 | 20,6 | 8 |
| 14 | 100 | 12311 | 20,5 | 10 |
| 15 | 99,8 | 8958 | 20,8 | 2 |
| 16 | 99,9 | 12511 | 20,4 | 11 |
| 17 | 99,9 | 3032 | 21,0 | 9 |
| 18 | 100 | 6706 | 20,5 | 11 |

### Herstellung des modifizierten Polyisocyanats PIC 19

Analog der allgemeinen Versuchsbeschreibung wurden 604,8 g Desmodur® XP 2410 in 35,0 g Butylacetat mit 23,94 g HEA umgesetzt und anschließend mittels 0,62 g tert.-Butylperoxy-2-ethylhexanoat in 35,64g Butylacetat bei 100°C polymerisiert. Es resultierte eine farblose Polyisocyanatmischung mit einem Festgehalt von 90 Gew.-%, einer Viskosität von 1181 mPa·s, einem Isocyanatgehalt von 19,8 Gew.-% und einer Farbzahl von 16 APHA.

### Herstellung des modifizierten Polyisocyanats PIC 21

Analog der allgemeinen Versuchsbeschreibung wurden 676,62 g ® Desmodur N 3200 mit 22,33 g Butandiolmonoacrylat umgesetzt und anschließend mittels 1,05 g Di-tert.-butylperoxid bei 160°C polymerisiert. Es resultierte eine farbhelle Polyisocyanatmischung mit einem Festgehalt von 98,8 Gew.-%, einer Viskosität von 46272 mPa·s, einem Isocyanatgehalt von 21,7 Gew.-% und einer Farbzahl von 50 APHA.

### Herstellung des modifizierten Polyisocyanats PIC 22

Analog der allgemeinen Versuchsbeschreibung wurden 676,65 g Desmodur® N 75 mit 16,75 g HPMA in 5,81 g Methoxypropylacetat (MPA) / Xylol 1:1 umgesetzt und anschließend mittels 0,79 g Di-tert.-butylperoxid bei 145°C polymerisiert. Es resultierte eine farbhelle Polyisocyanatmischung mit einem Festgehalt von 74,9 Gew.-%, einer Viskosität von 308 mPa·s, einem Isocyanatgehalt von 15,6 Gew.-% und einer Farbzahl von 16 APHA.

### Herstellung des modifizierten Polyisocyanats PIC 25

Analog der allgemeinen Versuchsbeschreibung wurden 601,9 g Desmodur® N 3600 gelöst in 35,0 g Butylacetat mit 13,42 g HEMA umgesetzt. Danach wurden 13,42 g Styrol zugegeben und die Mischung anschließend mittels 0,62 g tert.-Butylperoxy-2-ethylhexanoat in 35,64g Butylacetat bei 100°C polymerisiert. Es resultierte eine farblose Polyisocyanatmischung mit einem Festgehalt von 89,7 Gew.-%, einer Viskosität von 1531 mPa·s, einem Isocyanatgehalt von 18,7 Gew.-% und einer Farbzahl von 9 APHA.

### Herstellung des modifizierten Polyisocyanats PIC 26

Analog der allgemeinen Versuchsbeschreibung wurden 601,9 g Desmodur® N 3600 in 35,0 g Butylacetat mit 13,42 g HEMA umgesetzt. Danach wurden 13,42 g Methylmethacrylat zugegeben und die Mischung anschließend mittels 0,62 g tert.-Butylperoxy-2-ethylhexanoat in 35,64g Butylacetat bei 100°C polymerisiert. Es resultierte eine farblose Polyisocyanatmischung mit einem Festgehalt von 89,9 Gew.-%, einer Viskosität von 2662 mPa·s, einem Isocyanatgehalt von 18,9 Gew.-% und einer Farbzahl von 15 APHA.

### Herstellung des modifizierten Polyisocyanats PIC 27

Analog der allgemeinen Versuchsbeschreibung wurden 601,9 g Desmodur® N 3600 in 35,0 g Butylacetat mit 13,42 g HEMA umgesetzt. Danach wurden 13,42 g Styrol zugegeben und die Mischung anschließend mittels 0,62 g tert.-Butylperoxy-2-ethylhexanoat in 35,64g Butylacetat bei 100°C polymerisiert. Es resultierte eine farblose Polyisocyanatmischung mit einem Festgehalt von 89,7 Gew.-%, einer Viskosität von 1531 mPa·s, einem Isocyanatgehalt von 18,7 Gew.-% und einer Farbzahl von 9 APHA.

### Herstellung des modifizierten Polyisocyanats PIC 28

Analog der allgemeinen Versuchsbeschreibung wurden 601,9 g Desmodur® XP 2410 in 35,0 g Butylacetat mit 13,42 g HEMA umgesetzt. Danach wurden 13,42 g Styrol zugegeben und die Mischung anschließend mittels 0,62 g tert.-Butylperoxy-2-ethylhexanoat in 35,64g Butylacetat bei 100°C polymerisiert. Es resultierte eine farblose Polyisocyanatmischung mit einem Festgehalt von 89,8 Gew.-%, einer Viskosität von 1010 mPa·s, einem Isocyanatgehalt von 18,65 Gew.-% und einer Farbzahl von 16 APHA.

### Herstellung des modifizierten Polyisocyanats PIC 29

Analog der allgemeinen Versuchsbeschreibung wurden 601,9 g Desmodur® XP 2410 in 35,0 g Butylacetat mit 13,42 g HEMA umgesetzt. Danach wurden 13,42 g Methylmethacrylat zugegeben und die Mischung anschließend mittels 0,62 g tert.-Butylperoxy-2-ethylhexanoat in 35,64g Butylacetat bei 100°C polymerisiert. Es resultierte eine farblose Polyisocyanatmischung mit einem Festgehalt von 90,0 Gew.-%, einer Viskosität von 919 mPa·s, einem Isocyanatgehalt von 19,2 Gew.-% und einer Farbzahl von 11 APHA.

### Verwendungsbeispiele:

Diese Beispiele beschreiben die Herstellung gebrauchsfertiger Lacke auf Basis der Polyisocyanate PIC im Vergleich zu den jeweiligen nicht polyacrylatmodifizierten Ausgangspolyisocyanaten, deren Applikation und die Prüfung der resultierenden Lackfilme.

Zur Beurteilung der allgemeinen Lackeigenschaften wurden Klarlacke hergestellt. Dazu wurden die Polyisocyanate jeweils mit einem Polyol kombiniert, wobei ein NCO/OH-Verhältnis von 1 : 1 eingehalten wurde. Als Polyol diente Desmophen® A 870, ein Polyacrylatpolyol der Bayer MaterialScience AG, Leverkusen, DE, mit einem Festgehalt von 70 Gew.-% in Butylacetat, einer Viskosität von 3500 mPa·s bei 23°C, einer Säurezahl von 7,5 mg KOH/g (bezogen auf Lieferform) und einem OH-Gehalt von 2,95 Gew.-% (bezogen auf Lieferform). Bezogen auf Festharz (Summe der festen Anteile an Polyol und Polyisocyanat) wurden folgende Anteile an Zusatzstoffen verwendet.

| Bestandteile | | Gew.-% fest auf fest |
|---|---|---|
| Dabco 33 LV | (PUR-Katalysator von Air Products, 10 %ig in Butylacetat) | 0,3 |
| BYK 331 | (Verlaufsmittel der BYK-Chemie Wesel, DE, 50 %ig in Butylacetat) | 0,3 |
| BYK 141 | (Silikonentschäumer der BYK-Chemie Wesel, DE , 3%ig in Alkylbenzol / Isobutanol 11:2) | 0,03 |
| Tinuvin 292 | (Lichtschutzmittel der Ciba Geigy Basel, CH, 50 %ig in Xylol) | 1,0 |

Durch Zusatz eines Gemisches aus Solventnaphtha 100, Methoxypropylacetat, Xylol und n-Butylacetat (1 : 1 : 1 : 1) wurde auf einen Gehalt von 56 Gew.-% Bindemittel und 2 Gew.-% Additive eingestellt. Die Auslaufzeit (DIN 53 211, 4-mm-Düse) der so formulierten Lacke betrug 25 s. Damit sind die Lacke spritzfertig eingestellt und besitzen nun einen VOC-Wert (volatile organic compounds) von 3,5 lbs/gal.

Zur Prüfung der Verarbeitungszeit wurde der Viskositätsanstieg der Lacke innerhalb eines Zeitraumes von 7 Stunden gemessen.

Die Lacke wurden bei 23°C und 50% relativer Luftfeuchtigkeit auf Glasplatten appliziert, sowohl bei Raumtemperatur als auch 30 Minuten bei 60°C getrocknet, wobei die Trocknungsgeschwindigkeit (DIN 53 150) ermittelt wurde, und dann 7 Tage bei Raumtemperatur gelagert. Die Trockenfilmdicke betrug 55 bis 60 µm. Anschlieβend wurde die Härte nach König (DIN 53 157), der Glanz nach Gardner im 20°-Winkel und der Haze (DIN 67 530) sowie die Anlösbarkeit durch Wasser, Superbenzin, Methoxypropylacetat und Xylol [sofort, nach 1, 4, 7 Tagen nach einer Aushärtung von 30 Minuten bei 60°C] geprüft.

In der nachfolgenden Tabelle 3 sind die Prüfergebnisse der geprüften erfindungsgemäßen Lacke und der Vergleichslacke dargestellt.

**Tabelle 3: Prüfergebnisse von 2K PUR-Klarlacken (B1 = ® Desmodur N 3300, B2 = ® Desmodur N 3600)**

| Lack auf Basis von Polyisocyanat | | PIC 1 | PIC 2 | PIC 4 | PIC 5 | PIC 8 | PIC 9 | PIC 11 | PIC 12 | B1 | B2 |
|---|---|---|---|---|---|---|---|---|---|---|---|
| Viskosität (s) | sofort | 24 | 24 | 25 | 25 | 25 | 25 | 24 | 25 | 25 | 25 |
| nach | 1h | 24 | 26 | 25 | 25 | 25 | 25 | 25 | 25 | 25 | 25 |
| | 2h | 25 | 26 | 25 | 26 | 25 | 25 | 25 | 25 | 25 | 26 |
| | 3h | 26 | 26 | 26 | 26 | 26 | 25 | 25 | 25 | 26 | 27 |
| | 4h | 26 | 26 | 27 | 26 | 26 | 26 | 26 | 26 | 27 | 27 |
| | 5h | 27 | 27 | 28 | 28 | 27 | 27 | 27 | 28 | 27 | 27 |
| | 6h | 28 | 29 | 28 | 28 | 28 | 27 | 28 | 28 | 29 | 28 |
| Glanz (∠ 20°) | | 91 | 91 | 90 | 91 | 90 | 90 | 91 | 92 | 92 | 92 |
| Haze | | <10 | <10 | 14 | 10 | 14 | 12 | <10 | < 10 | <10 | <10 |
| Trocknung (h) | T1 | 1,5 | 1,5 | 1,5 | 1,0 | 2,0 | 2,0 | 2,0 | 2,0 | 2,0 | 2,5 |
| | T2 | 5,0 | 4,5 | 4,0 | 4,0 | 5,5 | 5,5 | 5,5 | 5,5 | 5,5 | 8,0 |
| | T3 | 5,5 | 5,5 | 5,0 | 5,0 | 6,5 | 6,5 | 7,0 | 6,0 | 8,0 | > 8 |
| | T4 | 7,5 | 7,0 | 7,5 | 7,5 | 8,0 | 8,0 | 8,0 | 8,0 | >8 | >8 |
| Pendeldämpfung (s) sofort | | 37 | 39 | 38 | 36 | 58 | 51 | 34 | 31 | 32 | 21 |
| nach 30 Min. 60°C + 1d RT | | 131 | 141 | 127 | 130 | 137 | 134 | 124 | 112 | 124 | 98 |
| | 4 d RT | 167 | 177 | 167 | 166 | 157 | 157 | 151 | 148 | 164 | 141 |
| | 7 d RT | 171 | 181 | 173 | 170 | 161 | 163 | 162 | 152 | 164 | 145 |
| Wasserbeständigkeit¹⁾²⁾ sofort | | 2 | 2 | 2 | 2 | 2 | 2 | 2 | 2 | 3 | 4 |
| nach 30 Min. 60°C + 1d RT | | 0 | 0 | 0 | 0 | 0 | 0 | 0 | 0 | 0 | 0 |
| | 4d RT | 0 | 0 | 0 | 0 | 0 | 0 | 0 | 0 | 0 | 0 |
| | 7d RT | 0 | 0 | 0 | 0 | 0 | 0 | 0 | 0 | 0 | 0 |
| | 16h 50°C | 0 | 0 | 0 | 0 | 0 | 0 | 0 | 0 | 0 | 0 |

| | | | | | | | | | | | |
|---|---|---|---|---|---|---|---|---|---|---|---|
| ¹⁾ Einwirkdauer 60 Min. | | | | | | | | | | | |
| ²⁾ 0 = bester Wert (ohne Befund), 5 = schlechtester Wert (Film aufgelöst) | | | | | | | | | | | |

| Lack auf Basis von Polyisocyanat | | PIC 1 | PIC 2 | PIC 4 | PIC 5 | PIC 8 | PIC 9 | PIC 11 | PIC 12 | B1 | B2 |
|---|---|---|---|---|---|---|---|---|---|---|---|
| Superbenzinbeständigkeit¹⁾²⁾ sofort | | 4 | 4 | 4 | 4 | 4 | 4 | 4 | 4 | 4-5 | 4-5 |
| nach 30 Min. 60°C + 1d RT | | 2 | 1-2 | 1-2 | 2 | 2 | 2 | 1-2 | 2 | 2-3 | 2-3 |
| | 4d RT | 0 | 0 | 0 | 0 | 0-1 | 0-1 | 0 | 0 | 0 | 0-1 |
| | 7d RT | 0 | 0 | 0 | 0 | 0 | 0 | 0 | 0 | 0 | 0 |
| | 16h 50°C | 0 | 0 | 0 | 0 | 0 | 0 | 0 | 0 | 0 | 0 |
| MPA-Beständigkeit¹⁾²⁾ sofort | | 4 | 4 | 4 | 4 | 4 | 4 | 4 | 4 | 5 | 5 |
| nach 30 Min. 60°C + 1d RT | | 2 | 3 | 2 | 2 | 3 | 2 | 3 | 3 | 3 | 4 |
| | 4d RT | 1 | 1 | 0 | 1 | 1 | 1 | 1 | 1 | 1 | 1 |
| | 7d RT | 1 | 0-1 | 0 | 1 | 1 | 1 | 1 | 1 | 1 | 1 |
| | 16h 50°C | 1 | 0-1 | 0 | 1 | 1 | 1 | 1 | 1 | 1 | 1 |
| Xylol-Beständigkeit ¹⁾²⁾ sofort | | 4 | 4 | 4 | 4 | 4 | 4 | 4 | 4 | 5 | 5 |
| nach 30 Min. 60°C + 1d RT | | 3 | 3 | 2 | 2 | 3 | 2 | 3 | 3 | 3 | 4 |
| | 4d RT | 1 | 1 | 0-1 | 1 | 1 | 1 | 1 | 0 | 1 | 1 |
| | 7d RT | 1 | 0-1 | 0-1 | 0 | 1 | 1 | 0-1 | 0 | 1 | 0 |
| | 16h 50°C | 0-1 | 0-1 | 0-1 | 0 | 0 | 0 | 0 | 0 | 0-1 | 0 |
| Schwefelsäure, 2%ig¹⁾²⁾ 7d RT | | 0 | 0 | 0 | 0 | 0 | 0 | 0 | 0 | 0 | 0 |
| Natronlauge, 2%ig¹⁾²⁾ 7d RT | | 0 | 0 | 0 | 0 | 0 | 0 | 0 | 0 | 0 | 0 |

| | | | | | | | | | | | |
|---|---|---|---|---|---|---|---|---|---|---|---|
| ¹⁾ Einwirkdauer 5 Min. | | | | | | | | | | | |
| ²⁾ 0 = bester Wert (ohne Befund), 5 = schlechtester Wert (Film aufgelöst) | | | | | | | | | | | |

Sowohl die erfindungsgemäßen Lacke auf Basis der polyacrylatmodifizierten Polyisocyanate als auch die Vergleichslacke auf Basis der Polyisocyanate B) haben eine lange Verarbeitungszeit ohne merklichen Viskositätsanstieg und liefern hochglänzende Lackfilme mit sehr geringen Haze-Werten. Die Prüfungen zeigen jedoch deutlich, dass die erfindungsgemäßen Beschichtungen auf Basis der PIC 1, 2, 4 und 5 gegenüber dem Vergleichslack auf Basis des unmodifizierten Polyisocyanats B 1 eine schnellere Trocknung, eine höhere Härte und eine geringfügig bessere Lösemittelbeständigkeit aufweisen. Die gleichen Ergebnisse liefern auch die erfmdungsgemäßen Lacke auf Basis PIC 8, PIC 9, PIC 11 und PIC 12 gegenüber dem Vergleichslack auf Basis des unmodifizierten Polyisocyanats B2. Die Prüfergebnisse zeigen die deutlichen Vorteile der erfindungsgemäßen Lacke, insbesondere bei den wichtigen Eigenschaften Trocknungsgeschwindigkeit, Härte und frühe Wasser- und Lösemittelbeständigkeit, die speziell bei der Autoreparaturlackierung eine bedeutende Rolle spielen.

## Patentansprüche

1. Verfahren zur Herstellung polyacrylatmdifizierter Polyisocyanate die wenigstens eine Struktureinheit der Formel (I) enthalten 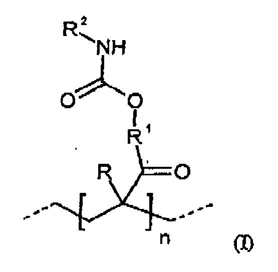 wobei
R Wasserstoff oder eine Methylgruppe ist,
R¹ ein gegebenenfalls heteroatomhaltiger Kohlenwasserstoffrest ist und
R² ein Kohlenwasserstoffrest mit wenigstens einer Isocyanatgruppe und darüber hinaus optioanl Uretahn-, Allophanat, Biuret, Uretdion-, Isocyanurat- und/oder Iminooxadiazindioneinheiten ist und
n eine Zahl 1 ist, bei dem
A) ein Teil der Isocyanatgruppen eines Ausgangspolyisocyanats mit
B) mindestens einem acrylat- und/oder methacrylatgruppenhaltigen Monoalkohol unter Urethanbildung umgesetzt wird und
C) anschließend oder gleichzeitig zur Urethanisierung die ungesättigten Gruppen des so gebildeten Reaktionsproduktes durch radikalisch initiierte Polymerisation unter Homo- oder Copolymerisation mit gegebenenfalls weiteren ungesättigten Monomeren zur Reaktion gebracht werden,
wobei die Ausganspolyisocyanate aromatische, araliphatische, cycloaliphatische und/oder aliphatische Polyisocyanate mit einem NCO-Gehalt von 5 bis 25 Gew.-%, einer NCO-Funktionalität ≥ 2 und einer Viskosität in lösemittelftreiem Zustand von 150 bis 200 000 mPa·s bei 23°C, gemessen mit einem Rotationsviskosimeter gemäß DIN 53019, sind.

2. Verfahren gemäß Anspruch 1, **dadurch gekennzeichnet, dass** als Ausgangspolyisocyanate urethan-, uretdion-, allophanat-, biuret-, isocyanurate- und/oder iminooxadiazindiongruppenhaltige Polyisocyanate mit ausschließlich aliphatisch und/oder cycloaliphatisch gebundenen NCO-Gruppen eingesetzt werden.

3. Polyacrylatmodifizierte Polyisocyanate erhältlich gemäß einem verfahren der Ansprüche 1 oder 2,
wobei die Ausgangspolyisocyanate einen gehalt an monomeren Diisocyanaten von unter 1 gew.-% aufweisen.

4. Verwendung der polyacrylatmodifizierten Polyisocyanate gemäß Anspruch 3, bei der Herstellung von Polyurethanen und/oder Polyharnostoffen.

5. Klebstoffe, Dichtmassen und Beschichtungen erhältlich unter Verwendung polyacrylatmodifizierter Polyisocyanate gemäß Anspruch 3.

6. Substrate beschichtet mit Beschichtungen oder verklebt mit Klebstoffen nach Anspruch 5.

7. Bindemittelkombinationen mindestens enthaltend ein polyacrylatmodifiziertes Polyisocyanat gemäß Anspruch 3, dessen NCO-Gruppen gegebenenfalls ganz oder teilweise blockiert sind sowie ein Bindemittel mit gegenüber NCO-Gruppen reaktiven Gruppen.

## Claims

1. Process for preparing polyacrylate-modified polyisocyanates which comprise at least one structural unit of the formula (I) 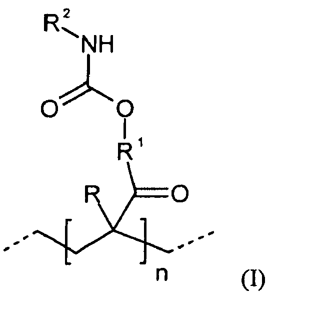 where
R is hydrogen or a methyl group,
R¹ is an optionally heteroatom-containing hydrocarbon radical and
R² is a hydrocarbon radical having at least one isocyanate group and additionally, optionally, urethane, allophanate, biuret, uretdione, isocyanurate and/or iminooxadiazinedione units and
n is a number ≥ 1, in which
A) some of the isocyanate groups of a starting polyisocyanate are reacted with
B) at least one monoalcohol containing acrylate and/or methacrylate groups, to form urethane, and
C) subsequently to or simultaneously with the urethanization the unsaturated groups of the resulting reaction product are reacted by free-radically initiated polymerization, with homopolymerization or copolymerization, with optionally further unsaturated monomers, wherein the starting polyisocyanates are aromatic, araliphatic, cycloaliphatic and/or aliphatic polyisocyanates having an NCO content of 5% to 25% by weight, an NCO functionality ≥ 2 and a viscosity in the solventless state of 150 to 200 000 mPa·s at 23°C, measured using a rotational viscometer in accordance with DIN 53019.

2. Process according to Claim 1, **characterized in that** as starting polyisocyanates use is made of urethane-, uretdione-, allophanate-, biuret-, isocyanurate- and/or iminooxadiazinedione-group-containing polyisocyanates containing exclusively aliphatically and/or cycloaliphatically attached NCO groups.

3. Polyacrylate-modified polyisocyanates which can be obtained according to a process of Claim 1 or 2, wherein the starting polyisocyanates have an amount of monomeric diisocyanates of less than 1% by weight.

4. Use of the polyacrylate-modified polyisocyanates according to Claim 3, in the preparation of polyurethanes and/or polyureas.

5. Adhesives, sealants and coatings obtainable using polyacrylate-modified polyisocyanates according to Claim 3.

6. Substrates coated with coatings or bonded with adhesives according to Claim 5.

7. Binder combinations at least comprising a polyacrylate-modified polyisocyanate according to Claim 3, some or all of whose NCO groups have optionally been blocked, and a binder having NCO-reactive groups.

## Revendications

1. Procédé pour la préparation de polyisocyanates modifiés avec des polyacrylates, qui contiennent au moins un motif structural de formule (I) 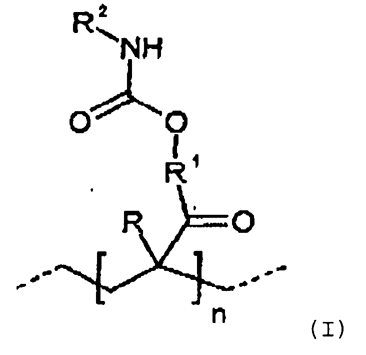 dans laquelle
R est un atome d'hydrogène ou un groupe méthyle,
R¹ est un radical hydrocarboné contenant éventuellement des hétéroatomes et
R² est un radical hydrocarboné comportant au moins un groupe isocyanate et en outre en option des motifs uréthanne, allophanate, biuret, urétdione, isocyanurate et/ou imino-oxadiazinedione et
n est un nombre ≥ 1,
dans lequel on fait réagir
A) une partie des groupes isocyanate d'un polyisocyanate de départ avec
B) au moins un monoalcool contenant des groupes acrylate et/ou méthacrylate, avec formation d'uréthanne et
C) à la suite de ou en même temps que la formation d'uréthanne on fait réagir les groupes insaturés du produit de réaction ainsi formé, par polymérisation à amorçage radicalaire en homo- ou copolymérisation, avec éventuellement d'autres monomères insaturés,
les polyisocyanates de départ étant des polyisocyanates aromatiques, araliphatiques, cycloaliphatiques et/ou aliphatiques ayant une teneur en NCO de 5 à 25 % en poids, une fonctionnalité NCO ≥ 2 et une viscosité à l'état sans solvant de 150 à 200 000 mPa.s à 23 °C, mesurée avec un viscosimètre rotatif selon DIN 53019.

2. Procédé selon la revendication 1, **caractérisé en ce qu'**on utilise comme polyisocyanates de départ des polyisocyanates contenant des groupes uréthanne, urétdione, allophanate, biuret, isocyanurate et/ou imino-oxadiazinedione, qui comportent exclusivement des groupes NCO en liaison aliphatique et/ou cycloaliphatique.

3. Polyisocyanates modifiés avec des polyacrylates, pouvant être obtenus selon un procédé de la revendication 1 ou 2, les polyisocyanates de départ ayant une teneur en diisocyanates monomères de moins de 1 % en poids.

4. Utilisation des polyisocyanates modifiés avec des polyacrylates, selon la revendication 3, dans la préparation de polyuréthannes et/ou de polyurées.

5. Adhésifs, matières d'étanchéité et revêtements pouvant être obtenus avec utilisation de polyisocyanates modifiés avec des polyacrylates selon la revendication 3.

6. Supports revêtus avec des revêtements ou collés avec des adhésifs selon la revendication 5.

7. Associations de liants au moins contenant un polyisocyanate modifié avec des polyacrylates selon la revendication 3, dont les groupes NCO sont éventuellement bloqués partiellement ou totalement, ainsi qu'un liant à groupes réactifs vis-à-vis de groupes NCO.
